# EUROPÄISCHE PATENTSCHRIFT

(11) **EP 1 958 461 B1**
(45) Veröffentlichungstag und Bekanntmachung des Hinweises auf die Patenterteilung: **16.03.2011**
(21) Anmeldenummer: 06792977.8
(22) Anmeldetag: 24.08.2006
(51) Int. Cl.: H04Q 3/66, H04M 7/12, H04L 29/06

(54) **VERFAHREN UND VORRICHTUNG ZUM SELBSTKONFIGURIEREN EINES VIRTUELLEN VERMITTLUNGSSYSTEMS**
METHOD AND DEVICE FOR AUTOMATICALLY CONFIGURING A VIRTUAL SWITCHING SYSTEM
PROCEDE ET DISPOSITIF D'AUTOCONFIGURATION D'UN SYSTEME DE COMMUTATION VIRTUEL

(30) Priorität: 30.11.2005 DE 102005057099
(43) Veröffentlichungstag der Anmeldung: 20.08.2008
(73) Patentinhaber: Nokia Siemens Networks GmbH & Co. KG, 81541 München (DE)
(72) Erfinder: LÖBIG, Norbert, 64291 Darmstadt (DE); TEGELER, Jürgen, 82377 Penzberg (DE)
(86) Internationale Anmeldenummer: PCT/EP2006/065612
(87) Internationale Veröffentlichungsnummer: WO 2007/062884

(56) Entgegenhaltungen:
- US-A1- 2004 042 469

## Beschreibung

Neuere Kommunikationsarchitekturen sehen die Trennung vermittlungstechnischer Netzwerke in verbindungsdienstbezogene Einheiten und den Transport der Nutzinformationen (Bearer Control) vor. Hieraus resultiert eine Trennung von Verbindungsaufbau und Beareraufbau. Ein derartiges Konzept bedeutet für den Kommunikationsverkehr, dass keine starke Bindung an die Netztopologie mehr gegeben ist. Ferner führt die Netzkonsolidierung, also der Ersatz von kleineren und gegebenenfalls veralteten Vermittlungsstellen durch konventionelle Konzentratoren und Access Networks oder paketbasiert angeschlossene Access Gateways zur Notwendigkeit der Steuerung einer grossen Teilnehmer- und Verbindunsgleitungsperipherie durch einen einzigen Vermittlungsknoten. Damit gewinnen zunehmend Forderungen nach immer grösseren Vermittlungsstellen/ Call Servern an Bedeutung. Beispielhaft hierfür sind Forderungen nach der Bedienbarkeit von 1 Mio. Teilnehmer durch eine einzige konventionelle Vermittlungsstelle oder durch einen IP-basierten Call Feature Server.

Die gegenwärtig existierenden Vermittlungsstellen, Call Server oder Media Gateway Controller sind aber auf eine bestimmte maximale Peripherie ausgelegt. Diese ist u.a. durch die Kommandomasken der Maschinensprache, die Datenspeicher zentraler und peripherer Einrichtungen, die Performanz dieser Teilsysteme und die Leistungsfähigkeit der Interkommunikation zwischen diesen Einheiten bestimmt. Die Ausbaustufen dieser Vermittlungsstellen werden ferner unter Kostengesichtspunkten deutlich unterhalb des Maximalausbaus betrieben, da nur hier Kostenoptimalität sichergestellt ist. (Die niedrigsten Kosten sollen sich dort finden, wo die im Durchschnitt häufigste Ausbaugrösse liegt). Damit lassen sich die Systemgrenzen i. a. nur unter Bereitstellung erheblicher Entwicklungsaufwendungen vergrössern. Dieser Aspekt wird noch durch die hohe Komplexität der Vermittlungssysteme verschärft, die u. a. dadurch bedingt ist, dass eine Vielzahl vermittlungstechnischer Features bei gleichzeitig fast völliger Ausfallsicherheit und höchster Systemverfügbarkeit geboten wird. Unter dem Aspekt beschränkter Entwicklungsbudgets und schneller Produktverfügbarkeit gewinnen damit alternative Lösungen an Bedeutung. Aus der Druckschrift US 2004/042469 A1 (CLARK C Y-S C ET AL) ist ein Verfahren und eine Vorrichtung bekannt für eine selbstlernende Call Routing Information in einem Kommunikationssystem. Eine Vermittlungsarchitektur wird vorgestellt, gemäß der das Vermittlungssystem in einer zentralisierten oder in einer verteilten Architektur implementiert werden kann. Zusätzlich kann das Vermittlungssystem in einer Vielfalt von Netzen implementiert werden, wie zum Beispiel einem leitungsvermittelten Netz und einem paketvermittelten Netz. Das Vermittlungssystem schließt einen Policy Server und einen selbstlernenden Applikationsserver ein. Der Policy Server schließt Routing Information ein für das Routing von Rufen über das Vermittlungssystem. Die Routen für eintreffende und abgehende Rufe werden analysiert, wenn sie das Vermittlungssystem passieren. Der selbstlernende Applikationsserver nutzt Techniken der künstlichen Intelligenz und Caching Algorithmen, um neue, effizientere Routing Wege oder initiale Routing Wege auf Basis der eintreffenden und abgehenden Rufe zu lernen. Dann aktualisiert der selbstlernende Applikationsserver den Policy Server mit neunen erlernten Routen.

Beim Stand der Technik wird die Peripherie unterteilt und an verschiedene Vermittlungsknoten angebunden, die selbst in geeigneter Weise untereinander oder über zwischengelagerte weitere Vermittlungsknoten vermascht sind. Damit ist der Nachteil verbunden, dass der Netzaufbau künstlich ist und hohe Administrationsaufwendungen benötigt. Ferner werden im Falle von #7 Signalisierung unerwünschte zusätzliche Point Codes zur internen Adressierung notwendig, die in externen fernen Systemen berücksichtigt werden müssen. Schliesslich muss aus Sicht des Bedieners nicht nur eine Vermittlungsstelle betrieben/ administriert werden, sondern eine Mehrzahl von Vermittlungsstellen in einem gegebenen Netz.

Der Erfindung liegt die Aufgabe zugrunde, einen Weg aufzuzeigen, wie ein derartiges sehr grosses Vermittlungssystem ausgebildet und konfiguriert werden kann.

Die Erfindung wird ausgehend von den in den Oberbegriffen der Patentansprüche 1 und 5 angegebenen Merkmale durch die in den kennzeichnenden Teilen beanspruchten Merkmale gelöst.

Der Vorteil der Erfindung ist darin zu sehen, dass durch Verwendung von Funktionen und Komponenten (HW und SW) eines herkömmlichen Vermittlungssystems/ Call Feature Servers die Peripheriegrösse des derart entstehenden virtuellen Vermittlungssystems erheblich über der des Ausgangssystems liegt. Insbesondere ist damit ein geringer Entwicklungsaufwand verbunden. Dafür sind die Kosten pro Port des erweiterten Systems kalkulierbar höher, aber doch nicht grösser als die doppelten Kosten pro Port des Ausgangssystems.

Die Wiederverwendung der Funktionen und Komponenten (HW und SW) eines herkömmlichen Vermittlungssystems/ Call Feature Servers wird durch Zusammenschaltung mehrerer Vermittlungsstellen mit einheitlicher Bedienung durch Erweiterung der physischen Lage eines Ports mit Index der Vermittlungsstelle ermöglicht. Ferner ist eine Zieladressbewertungsfunktionalität zur Reduktion der an einem Call beteiligten internen Vermittlungsstellen auf maximal 2 vorgesehen. Im Falle der Bedienbarkeit von #7 Signalisierung ist ein interner STP (Signalling Transfer Point) zur Bereitstellung eines einheitlichen externen Point Codes vorgesehen. Zur Unterstützung einer effektiven Internkommunikation kann die STP Funktion um geeignete Signalisierungsprotokolle, z. B. BICC Terminierung bzw. SIP Terminierung, erweitert sein und die Zieladressbewertungsfunktionalität umfassen. Insbesondere bei Fehlen von #7 Signalisierung ist die Zieladressbewertungsfunktionalität in einem eigenen Internen Routing Server (IRS) realisiert, der mit den internen Vermittlungssystemen mit geeigneten Signalisierungsprotokollen in Interkommunikation steht. Ein mögliches derartiges Protokoll ist insbesondere SIP.

Internes Routing und Zieladress-/ Ziffernbewertung werden durch STP - oder IRS inklusive schritthaltendem Lernen des aktuellen Routings durchgeführt. Letzteres erfolgt durch eine sichere und vereinfachte Administration und durch selbstlernende Routing Algorithmen in der zugeordneten STP - bzw. IRS Komponente. Durch die Einführung von zentral gesteuertem TDM Switch oder indirekt zentral gesteuertem IP/IP Gateway zur Bearer-Behandlung ist die Behandlung des TDM Falles ebenfalls möglich.

Schließlich ist mit einer derartigen Konfiguration eine optionale geographische Redundanz unterstützbar. Im Hinblick auf die angeschlossenen Teilnehmer-/ Verbindungsleitungen stellt sich dieses virtuelle Vermittlungssystem dem Betreiber wie ein einziges Vermittlungssystem dar, da die Bedienoberfläche eines einzigen Vermittlungsknotens geboten wird. Ferner weist das System für #7-basierte Signalisierung nach außen einen einzigen Point Code auf, gleichermaßen weist das System für die IP-basierten Signalisierungsprotokolle H.248, SIP, MGCP, H.323, SCTP/ IUA/ V5UA usw. vorzugsweise eine einzige IP Adresse oder aus Redundanzgründen höchstens 2 IP Adressen in Richtung einer jeweils fernen Einheit auf.

Die Erfindung wird im Folgenden anhand eines figürlich dargestellten Ausführungsbeispiels näher erläutert.

Es zeigen:
- Figur 1: #7-#7 Call über STP und IP/IP Gateway
- Figur 2: #7-Tln Call über STP und IP/IP Gateway
- Figur 3: Tln-Tln Call über STP und IP/IP Gateway
- Figur 4: #7-#7 Call über STP ohne IP/IP Gateway
- Figur 5: #7-Tln Call über STP ohne IP/IP Gateway
- Figur 6: Tln-Tln Call über STP ohne IP/IP Gateway
- Figur 7: #7-#7 Call über STP ohne IP/IP Gateway und mit in- ternem SIP Protokoll
- Figur 8: #7-Tln Call über STP ohne IP/IP Gateway und mit in- ternem SIP Protokoll
- Figur 9: Tln-Tln Call über STP ohne IP/IP Gateway und mit in- ternem SIP Protokoll
- Figur 10: SIP-Tln Call über STP ohne IP/IP Gateway und mit in- ternem SIP Protokoll
- Figur 11: Mehrfaches SIP Redirect bei geographischer Redundanz im virtuellen Vermittlungssystem
- Figur 12: Kommunikationspartner einer VSx im Normalbetrieb
- Figur 13: Kommunikationspartner einer VSx im Ersatzschalte- betrieb

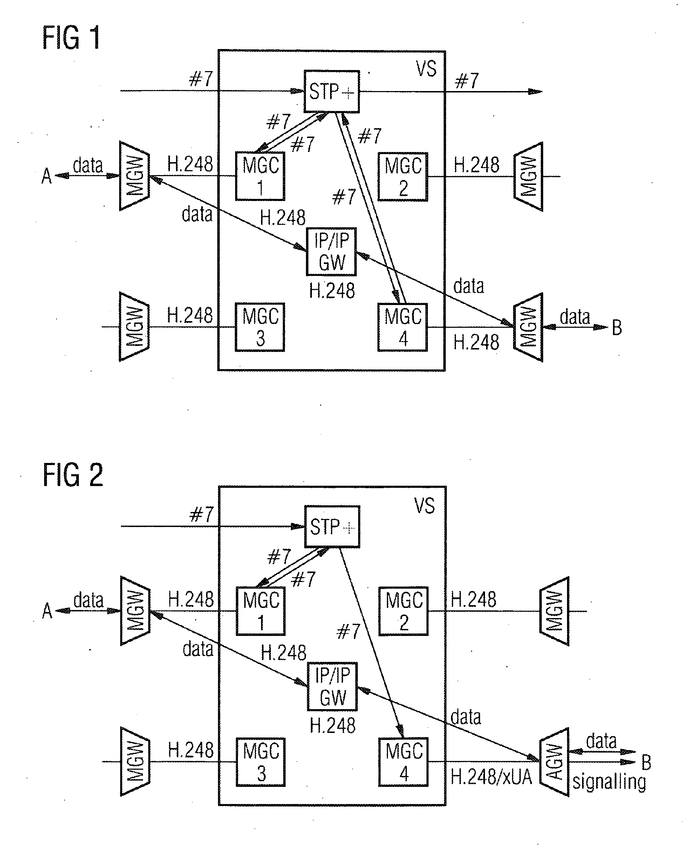

In Fig. 1 ist eine Vorrichtung gemäß der Erfindung aufgezeigt. Demgemäß sind insgesamt n herkömmliche Vermittlungssysteme vorgesehen. Diese sind als Media Gateway Controller MGC (Anschluss von Zwischenamtsleitungen) oder als Call Feature Server (Anschluss von Teilnehmern) ausgebildet. Erfindungsgemäß ist vorgesehen, n = 4 herkömmliche Vermittlungssysteme MGC1...MGC4 zu einem einzigen virtuellen Vermittlungssystem VS zusammenzuschalten. Hierbei ist die Zahl 4 als beispielhaft anzusehen, wobei n prinzipiell jede beliebige natürliche Zahl sein kann. Jedes der 4 Vermittlungssysteme MGC bedient dabei einen Teil der Peripherie des virtuellen Vermittlungssystems VS. Dies bedeutet, dass die Peripherie des virtuellen Vermittlungssystems VS gleich der Summe der Peripherien der herkömmlichen Vermittlungssysteme MGC1...MGC4 ist. Die Peripherie kann dabei als herkömmliche Teilnehmer- oder Zwischenamtsleitungsperipherie ausgebildet sein, wobei die Nutzdaten über TDM Technik an das Vermittlungssystem herangeführt werden, oder als IP-basierte Peripherie, bei der die Peripherie den Nutzdatenstrom nicht notwendigerweise über das Vermittlungssystem führt, sondern diesen vorzugsweise direkt und ebenfalls IP basiert zum jeweiligen fernen Kommunikationspartner führt bzw. diesen vom jeweiligen fernen Kommunikationspartner erhält.

Bei Vorhandensein einer TDM Peripherie ist die Signalisierung vorzugsweise als standardisierte Teilnehmersignalisierung oder Zwischenamtssignalisierung wie V5 Signalisierung oder #7 Signalisierung ausgebildet. Bei Vorhandensein einer IP Peripherie ist die Signalisierung vorzugsweise als standardisierte Signalisierung z. B. via H.248, H.323, MGCP, SIP und/ oder SCTP/IUA/V5UA ausgebildet. Die Verwendung anderer, auch proprietärer Signalisierungsprotokolle ist ebenfalls möglich.

Jedes herkömmliche Vermittlungssystem MGC besteht aus peripheren Einheiten und zentralen Einheiten, die über ein Nachrichtenverteilsystem in Interkommunikation stehen. Das Nachrichtenverteilsystem ist optional derart erweitert, dass eine Interkommunikation insbesondere zwischen den peripheren Einrichtungen zweier beliebiger Vermittlungssysteme aus der Menge der 4 herkömmlichen Vermittlungssysteme möglich ist. Jedes Port des virtuellen Vermittlungssystems VS ist jeweils exakt ein Port eines einzigen der 4 Vermittlungssysteme MGC.

Eine A-seitige Belegung wird im Falle einer V5 Signalisierung über die V5 Schnittstelle und im Falle einer #7 Signalisierung über die Anbindung des zu belegenden TDM Trunks an der Vermittlungsstelle oder einem vorgelagerten Gateway eindeutig einer der 4 herkömmlichen Vermittlungsstellen zugeordnet. Im Falle einer MGCP oder H.248 basierten Teilnehmersignalisierung ist die A-seitig belegte Vermittlungsstelle MGC aus der Menge der 4 Vermittlungsstellen ebenfalls eindeutig bestimmt. Entsprechendes gilt für über IUA Signalisierung geführte ISDN Signalisierung oder über IP Signalisierung abgesetzte V5.2 Steuerung (VSUA).

Im Rahmen der A-seitigen Belegung erfolgt in der A-seitigen Vermittlungsstelle MGC eine Ziffernbewertung bzw. Zieladressbewertung sowie eine Routing-Entscheidung. Findet sich das B-seitige Ziel als Teilnehmer- oder externe Verbindungsleitung der A-seitig für diesen Call tätigen Vermittlungsstelle, so erfolgt konventionelle Verarbeitung durch diese Vermittlungsstelle. Die weiteren n-1 (also 3) Vermittlungsstellen des virtuellen Vermittlungssystems VS werden nicht in die Bearbeitung des Calls einbezogen.

Tritt dieser Fall nicht auf und der Zielteilnehmer bzw. die gewünschte externe Verbindungsleitung ist der Peripherie eines der weiteren 3 Vermittlungssysteme zugehörig, so erfolgt in dem A-seitigen Vermittlungssystem ein Default Routing. Die zugehörige Signalisierung wird via #7 Signalisierung an einen internen STP (Signalling Tranfer Point) mit Zieladressbewertungsfunktionalität (STP+) oder via SIP Protokoll an einen internen Routing Server (IRS) weitergeleitet. Der STP+ - bzw. IRS führt eine Ziffernbewertung bzw. Zieladressbewertung durch und ordnet den internen Call der virtuellen Vermittlungsstelle VS B-seitig genau einer der verbleibenden 3 Vermittlungsstellen MGC zu.

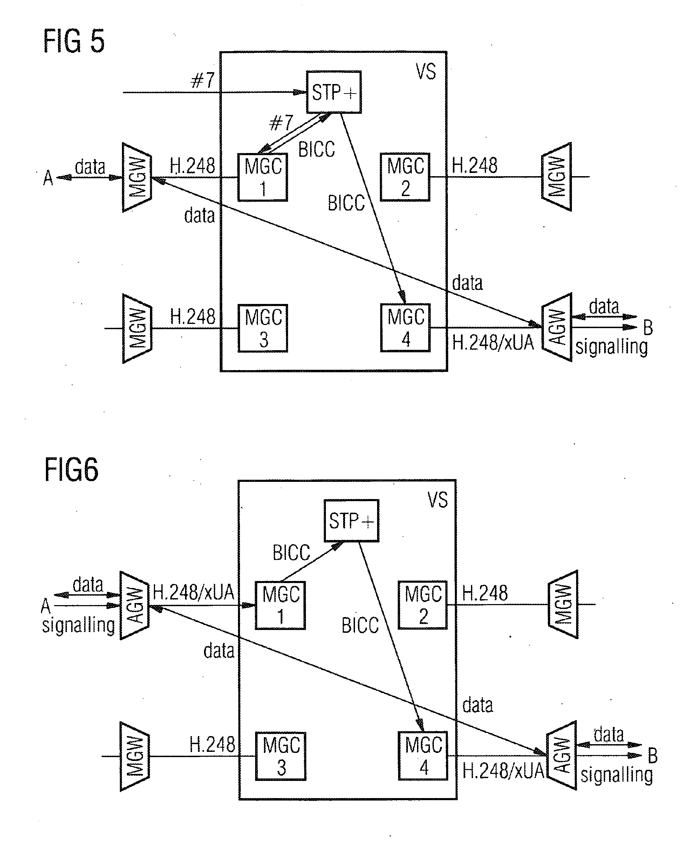

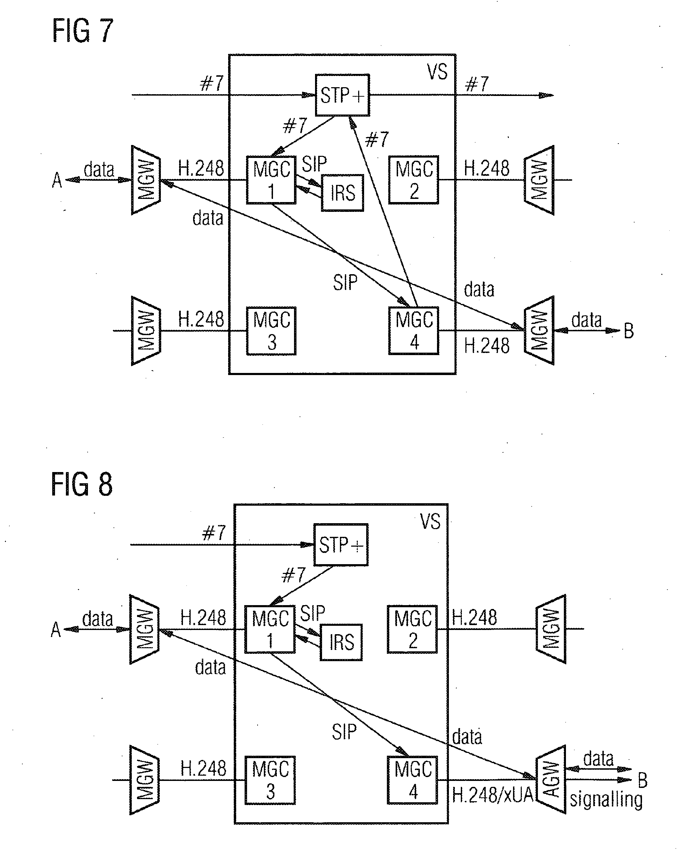

Wird ein STP Server verwendet (Fig. 1 - Fig. 6), erfolgt von diesem ein Relay der Signalisierung zwischen A- und B-seitiger Vermittlungsstelle MGC der virtuellen Vermittlungsstelle VS. Wird ein SIP basierter IRS verwendet (Fig. 7 - Fig. 10), erfolgt ein Redirect der Signalisierungsbeziehung in der Weise, dass fortan A-seitige und B-seitige Vermittlungsstelle direkt miteinander bis zum Ende des Calls kommunizieren.

Die Routing-Entscheidung kann a priori deterministisch erfolgen, was eine entsprechende Administration im STP+ - bzw. IRS erforderlich macht. Erfindungsgemäss kann insbesondere ebenfalls eine mitlaufend lernende Ziffernbewertung bzw. Zieladressbewertung optional erfolgen. Hierzu wird algorithmisch eine B-seitig vermutlich zuständige Vermittlungsstelle bestimmt und der Erfolg der Zuordnung überwacht durch das erneute Default Routing einer fälschlicherweise als B-seitig zuständige Vermittlungsstelle zugeordneten Vermittlungsstelle. Zur Erfolgskontrolle des optionalen Verfahrens wird der Signalisierungsinformation eine im virtuellen Vermittlungssystem eindeutige interne Call-ID zugesetzt. Zusätzlich kann ein interner Hop Counter mitgeführt werden.

Im optionalen Verfahren wird der Misserfolg einer internen Belegung eines der n-1 (also 3) Vermittlungssysteme mit einer Reject-Meldung explizit oder mit Timer-Ablauf implizit offenbar. Dies führt zur erneuten Belegung des STP+ bzw. des IRS durch die A-seitige interne Vermittlungsstelle. Bei Verwendung des SIP Protokolls erfolgt das wiederholte Redirect des gleichen Rufs auf den IRS durch die A-seitige Vermittlungsstelle aufgrund der expliziten oder impliziten Reaktion der fälschlicherweise belegten Vermittlungsstelle. Erkennt der STP+ bzw. IRS die selbst verursachte Falschzuordnung der B-seitigen internen Vermittlungsstelle über die mitgeführte, im virtuellen Vermittlungsstelle VS eindeutige Call ID, so korrigiert dieser seinen Zuordnungsalgorithmus entsprechend und führt einen Wiederholungsversuch durch, falls der Hop Counter dies noch zulässt. Der STP+ bzw. IRS oder auch jedes interne Vermittlungssystem MGC kann ggf. eine Auslöseentscheidung wegen Erreichen des Hop Counter Schwellwertes treffen. Das deterministische administrative Zuordnungsverfahren kann mit dem optionalen B-seitigen Zuordnungsverfahren ebenfalls kombiniert sein. So können gewis.se Zuordnungen administrativ festgelegt und gepflegt sein, zugleich können andere auf dem selbstlernenden Ansatz beruhen.

Der Nutzdatenstrom einer via IRS abgewickelten Verbindung zwischen A- und B-seitiger interner Vermittlungsstelle wird erst geschaltet, wenn die beiden A- und B-seitigen Signalisierungspartner bestimmt sind. Sind A- Seite oder B-Seite direkt via TDM angebunden, erfolgt eine IP-Wandlung durch zwischengeschaltetes Media Gateway MGW auf der A- und/oder B-seite unter autarker Steuerung der A-seitigen bzw. B-seitigen Vermittlungsstelle.

Der Nutzdatenstrom einer durch interne #7 Signalisierung gesteuerten virtuellen Vermittlungsstelle kann an einen reinen TDM Switch herangeführt werden, dessen TDM Terminations mit internen CIC (Circuit Identification Codes) adressiert werden können. Hat der interne STP des virtuellen Vermittlungssystems das interne B-seitige System erfolgreich bestimmt, so besteht eine Durchschaltung über diesen TDM Switch, die unter Steuerung des internen STP+ eingestellt wurde und für die Dauer des Calls 2 interne CICs an diesem TDM Switch belegt. Sind A- Seite oder B-Seite direkt via TDM angebunden, ist die vorstehend erwähnte IP-Wandlung durch zwischengeschaltetes MG auf der A- und/oder B-seite unter Steuerung der A-seitigen bzw. B-seitigen Vermittlungsstelle somit nicht erforderlich.

Alternativ zum TDM Switch kann im Falle der internen #7 Signalisierung auch ein IP-IP Gateway zum Einsatz kommen (Fig. 1 - Fig. 3), das z. B. über ein MGCP- oder H.248 Protokoll gesteuert wird. Die A-seitige Belegung des Gateways erfolgt hierbei durch die A-seitige interne Vermittlungsstelle, die B-seitige Belegung des Gateways erfolgt durch die B-seitige interne Vermittlungsstelle. Der interne STP+ trägt dafür Sorge, dass A- und B-Seite mit geeigneten CIC belegen, die es dem IP-IP Gateway gestatten, die beiden hereinkommenden Calls als zueinander gehörig zu erkennen. Sind A- Seite oder B-Seite direkt via TDM angebunden, erfolgt wiederum eine IP-Wandlung durch ein zwischengeschaltetes Media Gateway MGW auf der A- und/ oder B-Seite unter autarker Steuerung der A-seitigen bzw. B-seitigen Vermittlungsstelle. Eine Optimierungsmöglichkeit ist durch Vorhandensein von IP-IP GW und TDM Switch für interne #7 Signalisierung gegeben, welche dadurch gekennzeichnet ist, dass vermeidbare zweifache IP TDM Wandlung innerhalb eines Calls unterbleibt.

Zur einheitlichen Bedienung des virtuellen Vermittlungssystems wird eine einem einzigen Vermittlungssystem eigene Bedienoberfläche angeboten. Dies bedeutet, dass in die Nummerierung eines Ports des virtuellen Vermittlungssystems die Nummer des internen Vermittlungssystems mit eingeht. Das Verwalten eines Ports ist dem Bediener damit in der ihm gewohnten Weise möglich. Die nachgeordnete Administration des betroffenen internen Vermittlungssystems ist damit Sache des Management Systems. Das Verwalten von Routen für den Fall des deterministischen Verfahrens oder von alternativen Routen für den Fall des optionalen Verfahrens wird durch das Management System in der Weise unterstützt, dass die beteiligten internen Systeme einschließlich STP+ bzw. IRS automatisch mit den Routing Informationen versorgt werden. Gebührentickets werden in den maximal 2 internen Vermittlungsstellen jeweils getrennt generiert. Eine Korrelation erfolgt z. B. über interne Call ID, beteiligte Rufnummern und Zeitstempel usw. im Rahmen einer Post Processing Komponente des Verfahrens.

Statistiken, Lastanzeigen usw. werden lokal pro internes Vermittlungssystem erfasst, dem Bediener jedoch in einheitlicher Weise durch das Management System zur Verfügung gestellt. Ferner werden Management Applikationen zur vereinfachten Teilnehmer - und #7 Administration auf die Situation des virtuellen Vermittlungssystems adaptiert, um dem Bediener den Eindruck eines einheitlichen Vermittlungssystems zu bieten.

Eine optionale Steigerung der Performanz des virtuellen Vermittlungssystems erfolgt durch direktes Routing der vermittlungstechnischen Nachrichten von der A-seitigen peripheren Einheit der A-seitigen internen Vermittlungsstelle zu der B-seitigen peripheren Einheit der B-seitigen Vermittlungsstelle, sofern die B-seitige periphere Einrichtung der A-seitigen Vermittlungsstelle und die A-seitige periphere Einrichtung der B-seitigen Vermittlungsstelle diese Information nicht benötigen (z. B. SDP Beschreibungen für Endgeräte).

Fig. 1 zeigt die Durchschaltung einer an dem internen Vermittlungssystem MGC1 hereinkommenden Belegung über eine Verbindungsleitung mit #7 Signalisierung. Ziel des Rufs ist eine Verbindungsleitung unter Steuerung von MGC4, die ebenfalls mit #7 signalisiert. Da MGC1 für das Ziel nicht zuständig ist, wird die Belegung an die Adressbewertungsfunktion des STP+ weitergereicht. Diese findet MGC als zuständig für das Ziel und belegt MGC4. Zu transferierende #7 Signalisierung passiert den STP+, da dieser den einheitlichen Point Code des virtuellen Vermittlungssystems bereitstellt. Der Nutzdatenstrom wird über ein IP/ IP GW geleitet. Referenzierte CICs Richtung MGC1 und MGC4 sind korreliert und werden durch STP+ so vergeben, dass das IP/ IP GW die notwendige Nutzdatendurchschaltung bidirektional durchführen kann.

Fig. 2 zeigt die Verhältnisse von Fig. 1 mit dem Unterschied, dass das Ziel ein durch MGC4 bedienter Teilnehmer hinter einem Access Gateway ist. Mithin entfällt die Notwendigkeit der #7 Signalisierung in Richtung der B-Seite. Die Adressbewertungsfunktion ist nach wie vor im STP+ realisiert. Die interne Signalisierung erfolgt mit #7. Die Nutzdaten werden über IP/IP Gateway unter Zuhilfenahme geeigneter CICs geführt.

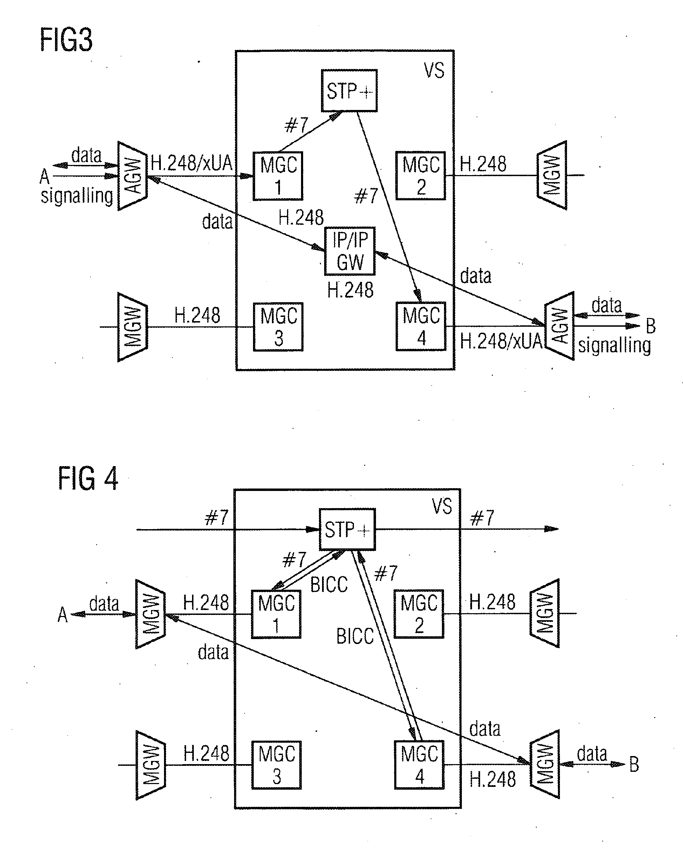

Fig. 3 zeigt die Verhältnisse von Fig. 2 mit dem Unterschied, dass der Ursprung des Rufs ein hinter einem Access Gateway angeschlossener Teilnehmer des MGC1 ist. Mithin verschwindet die externe #7 Signalisierung vollständig. Die Adressbewertungsfunktion ist nach wie vor im STP+ realisiert. Die interne Signalisierung erfolgt mit #7. Die Nutzdaten werden über das IP/ IP Gateway unter Zuhilfenahme geeigneter CICs geführt.

Die Figuren 4-6 zeigen die Verhältnisse der Figuren 1-3 mit dem Unterschied, dass BICC als interne Signalisierung verwendet wird. Hierdurch entfällt die Notwendigkeit des Einfügens eines IP/ IP Gateways im Nutzdatenstrom.

Fig. 7 zeigt die Abspaltung der Adressbewertungsfunktion aus dem STP+ in einen eigenen Internen Routing Server (IRS), der das Signalisierungsprotokoll SIP verwendet. Die internen Vermittlungssysteme MGC1-MGC4 kommunizieren intern mit der Adressbewertungsfunktion vermittels SIP. STP+ spielt nur noch eine Rolle bei externen Rufen mit #7 Signalisierung. Nach Abfrage des IRS ist MGC1 für die dargestellte von einer #7 gesteuerte A-seitigen Verbindungsleitung kommenden Ruf in der Lage, diesen an MGC4 weiterzugeben zur Belegung einer B-seitigen Verbindungsleitung mit #7 Signalisierung. Der zugehörige Nutzdatenstrom wird hierbei direkt zwischen A-seitigen und B-seitigem Media Gateway geführt.

Fig. 8 zeigt die Verhältnisse von Fig. 7 mit dem Unterschied, dass das Ziel ein durch MGC4 bedienter Teilnehmer hinter einem Access Gateway ist. Mithin entfällt die Notwendigkeit der #7 Signalisierung in Richtung der B-Seite. Die Adressbewertungsfunktion ist wie vor im IRS realisiert. Die interne Signalisierung erfolgt mit SIP. Es erfolgt ein Redirect via SIP. Der zugehörige Nutzdatenstrom wird hierbei direkt zwischen A-seitigen Media Gateway und B-seitigem Accesss Gateway geführt.

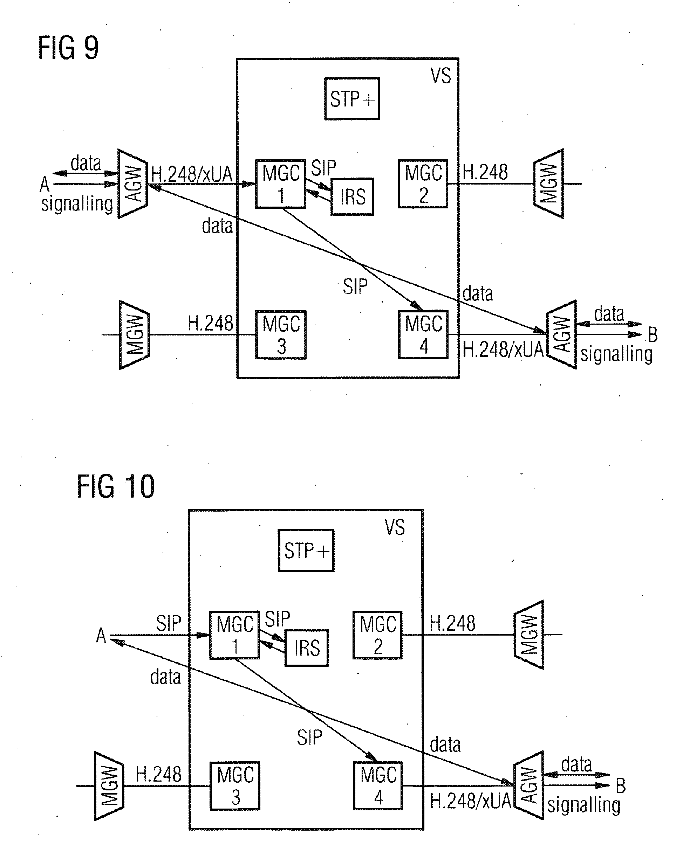

Fig. 9 zeigt die Verhältnisse von Fig. 8 mit dem Unterschied, dass der Ursprung des Rufs ein hinter einem Access Gateway angeschlossener Teilnehmer des MGC1 ist. Mithin entfällt die Notwendigkeit der #7 Signalisierung in Richtung der A-Seite. Die Adressbewertungsfunktion ist wie vor im IRS realisiert. Die interne Signalisierung erfolgt mit SIP. Es erfolgt ein Redirect via SIP. Der zugehörige Nutzdatenstrom wird hierbei direkt zwischen A-seitigen und B-seitigem Access Gateway geführt.

Fig.10 zeigt die Verhältnisse von Fig. 9 mit dem Unterschied, dass der A-seitige Teilnehmer ein SIP basierter Teilnehmer, der durch MGC1 bedient wird. Mithin entfällt die Notwendigkeit der #7 Signalisierung in Richtung der A-Seite und B-Seite. Die Adressbewertungsfunktion ist wie vor im IRS realisiert. Die interne Signalisierung erfolgt mit SIP. Es erfolgt ein Redirect via SIP. Der zugehörige Nutzdatenstrom wird hierbei direkt zwischen A-seitigem Teilnehmer und B-seitigem Access Gateway geführt.

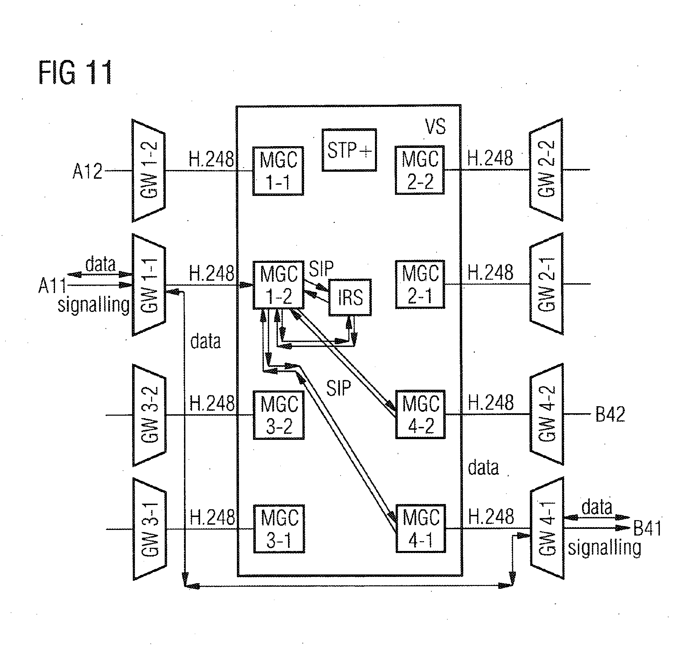

Zur optionalen Unterstützung geographischer Redundanz der einzelnen Vermittlungssysteme (Fig. 11 - Fig. 13) besitzt der IRS die für die geographische Redundanz notwendige zusätzliche Topologieinformation des Netzes. Dies bedeutet, dass jeder Teilnehmer/ Trunk am virtuellen Vermittlungssystem von mindestens 2 a priori bekannten Vermittlungsstellen des virtuellen Systems bedient werden kann. Der IRS erhält auf administrativem Wege Kenntnis, welche alternative Routings es im virtuellen Vermittlungssystem VS wegen der geographischer Redundanz gibt.

Der IRS kennt außerdem die Betriebsweise der geographischen Redundanz der Teilsysteme des virtuellen Vermittlungssystems. Insbesondere ist dem IRS bekannt, ob ein Vermittlungssystem geographisch sich im 1:1 ACT/ STB Modus (1 Vermittlungssystem aktiv, ein Vermittlungssystem komplett standby) oder im 1:1 Loadsharing Modus (2 interne Vermittlungssysteme bedienen eine Peripherie im Normalbetrieb jeweils hälftig, im Ersatzschaltebetrieb ist ein internes Vermittlungssystem bereits zur Bedienung der gesamten Peripherie in der Lage) befindet.

Kann eine A-seitige Belegung nicht lokal in einem Vermittlungssystem des geographisch redundanten virtuellen Vermittlungssystems bearbeitet werden, so erfolgt das Routing auf den IRS. Dieser findet aufgrund der Zieladressbewertung das zuständige logische Vermittlungssystem, weiß aber zunächst nicht, welcher der geographisch redundanten Vermittlungssysteme zuständig ist, ordnet eine der beiden Möglichkeiten zu und vermerkt dies in seiner mitlernenden Datenbasis. Ordnet der IRS den falschen geographischen Partner zu, so kommt das A-seitige Vermittlungssystem mit dem gleichen Ruf zum wiederholten Male auf den IRS zu. Hierauf aktualisiert dieser seine Datenbasis und ordnet den geographisch redundanten Partner zu. Kommt es danach nochmals zu einer Wiederholungsanfrage des A-seitigen Vermittlungssystems für den gleichen Ruf, so stehen offenbar beide geographisch redundanten B-seitigen Vermittlungssysteme nicht zur Verfügung und der Ruf kann durch den IRS ggf. sicherheitshalber nach einem weiteren Zuordnungsversuch ausgelöst werden. Erhält die per IRS für einen Ruf auf eine B-seitige Vermittlungsstelle zugeordnete Vermittlungsstelle keine Quittung oder eine Ablehnung, so erfolgt eine erneute Belegung des IRS durch die A-seitige Vermittlungsstelle für den vorliegenden Ruf. Damit kann die gemäß optionalem Verfahren mitlernende Datenbasis des IRS ebenfalls aktualisiert werden. Erfolgt bei geographischem Loadsharing eine B-seitige Belegung auf ein durch die geographischen redundante Vermittlungsstelle zu bedienendes Port, so erfolgt stets die Belegung des IRS, der dann das Redirect auf den geographischen Partner durchführt und dabei seine lernende Datenbasis gemäß aktueller Zuordnung anpasst. Insbesondere kann mit dem über eine einzige oder wenige Belegungen erreichten Lerneffekt im IRS unter Ausnutzung der Topologieinformationen über die Art der geographischen Redundanz die Zuordnung ganzer Gesamtheiten von Teilnehmern und Verbindungsleitungen aktualisiert werden. Ereignet sich also eine Ersatzschaltung auf der Grundlage geographischer Redundanz, so wird der IRS nur wenige Falschzuordnungen durchführen müssen, um den aktuellen Verschaltungszustand zu erkennen und dann ohne weitere Falschzuordnungen die jeweils richtigen B-seitige interne Vermittlungsstelle zuzuordnen.

Es lässt sich somit mit den Konfigurationen gemäß den Figuren 1 bis 10 eine geographische Redundanz realisieren. Die entsprechenden Verhältnisse sind in den Figuren 11 bis 13 aufgezeigt. Diese wird im Folgenden anhand der n = 4 Vermittlungssysteme MGC1...MGC4 des virtuellen Vermittlungssystems beschrieben:

Zunächst wird davon ausgegangen, dass die Vermittlungssysteme MGC jeweils paarweise geographisch redundant sind. Ist dies nicht der Fall und befindet sich etwa eine Teilmenge der 4 Vermittlungssysteme MGC1...MGC4 am selben Standort, so lässt sich auf diese Teilmenge trotzdem die folgende Überlegung anwenden. Die paarweise geographische Trennung ist damit keine Einschränkung des allgemeinen Falles. Die Signalisierungspartner eines beliebigen der zusammengeschalteten Vermittlungssysteme MGC1...MGC4 müssen in der Lage sein, im Falle eines Ausfalls eines der 4 Vermittlungssysteme MGC1...MGC4 nahtlos oder annähernd nahtlos mit einer anderen der zusammengeschalteten Einheiten weiterzukommunizieren. Bei diesen Signalisierungspartnern kann es sich um periphere Elemente der Vermittlungssysteme MGC1..MGC4 (e.g. Media Gateways oder Access Gateways) aber auch um entfernte Knoten (e.g. SIP proxies) handeln. Die Protokolle, die hier zu betrachten sind, sind in erster Linie das SIP, H.323, H.248 und MGCP Protokoll. Es kann sich aber auch um proprietäre Protokolle handeln.

Das Problem einer nahtlosen Ersatzschaltung wird mit folgendem Ansatz gelöst:

Es wird hierbei davon ausgegangen, dass einem Vermittlungssystem MGCx k Kommunikationspartner zugewiesen sind. Nun wird auf allen n Vermittlungssystemen des virtuellen Vermittlungssystems außer der im Normalfall in Betrieb befindlichen Datenbasis eine "Schattendatenbasis" administriert, die aber zunächst nicht aktiv ist. Die Schattendatenbasis bewirkt, dass jeder Kommunikationspartner des Vermittlungssystems MGCx mindestens auf einer weiteren Plattform eines Vermittlungssystems MGCy des virtuellen Vermittlungssystems administriert ist. Dies gilt für alle n Vermittlungssysteme des virtuellen Vermittlungssystems. Die Schattendatenbasis ist die Summe dieser Zweitadministrationen. Damit kann jeder Kommunikationspartner eines beliebigen Vermittlungssystems MGCx bei gestörter Kommunikationsbeziehung zum Vermittlungssystem MGCx mit einem anderen (vordefinierten) Vermittlungssystem des virtuellen Vermittlungssystems Kontakt aufnehmen. Dies ist Stand der Technik in den standardisierten Protokollen SIP, H.323, H.248 und MGCP. Für proprietäre Protokolle lässt sich ein entsprechender Mechanismus leicht implementieren (falls nicht vorhanden).

Es ist dabei von Vorteil, wenn die Kommunikationspartner jedes Vermittlungssystems MGCx innerhalb der Schattendatenbasis möglichst gleichmäßig auf die n-1 restlichen Vermittlungssysteme verteilt sind. Wenn jetzt das Vermittlungssystem MGCx ausfällt, so wird dies von jedem Kommunikationspartner des Vermittlungssystems MGCx erkannt. Damit kann jeweils zu einer vordefinierten Ersatzschalteplattform MGCy Kontakt aufgenommen werden. Wenn Teilnehmer und Verbindungsleitungen des Vermittlungssystems MGCx bei dessen Ausfall im Sinne von Verkehrslast möglichst gleichmäßig auf die restlichen n-1 Vermittlungssysteme des virtuellen Vermittlungssystems verteilt werden können, kann die Kapazität, die in den Vermittlungssystemen für diesen Ersatzschaltefall zurückgehalten werden muss, optimal klein sein. Hiermit lassen sich viel günstigere Redundanzschemata als 1+1 Redundanz erzielen. Im günstigsten Fall wird man zu einer n+1 Redundanz kommen, die die Bedingung erfüllt, das ein einzelner Ausfall eines beliebigen Vermittlungssystems MGCx zu einer vollständigen Ersatzschaltung auf die restlichen Vermittlungssysteme führt.

Mit diesem Konzept lassen sich erhebliche Hardware Kosten gegenüber einer 1+1 Redundanz einsparen.

Nach Ausfall des Vermittlungssystems MGCx melden sich also die zugeordneten Kommunikationspartner bei den restlichen Vermittlungssystemen MGCk (k /= x) gemäß dem über die Topologieinformation gegebenen Verteilung. Die zugehörigen Dateninformationen über Teilnehmer und Verbindungsleitungen werden als Schattendatenbasis in den jeweiligen internen Vermittlungssystemen geführt. In Summe bedeutet dies, dass jeder Teilnehmer und jede Verbindungsleitungen in genau 2 geographisch redundanten internen Vermittlungsstellen MGCi administriert wird. Die Verfügbarkeit von Teilnehmer oder Verbindungsleitungen über ein internes Vermittlungssystem MGC wird durch die In-Service Konfiguration der der zugehörigen Access Gateways und Media Gateways bewirkt. Insbesondere ist auch der Fall einer kompletten geographischen 1:1 Redundanz abgedeckt.

Fig. 11 zeigt ein aus 4 jeweils komplett 1:1 redundanten internen Vermittlungssystemen MGC aufgebautes virtuelles Vermittlungssystem. Der über Gateway GW 1-1 einfallende Ruf wird dem MGC 1-1 zugestellt, da das GW 1-1 gerade von MGC 1-1 bedient wird. Da die B-seitige Adresse nicht durch den MGC 1-1 bedient wird, wendet sich MGC 1-1 an den IRS. Dieser verweist MGC 1-1 an MGC 4-2, da das Ziel B41 über Gateway GW 4-1 erreicht werden kann und dieses bisher von MGC 4-2 bedient wurde. Dies führt zur Belegung des MGC 4-2 durch MGC 1-1. Durch Timer-Ablauf oder durch explizites Reject durch MGC 4-2 muss MGC 1-1 nun wiederholt den IRS mit dem Ruf konfrontieren. Dieser erkennt, dass er eine Falschzuordnung durchgeführt hat und schließt hieraus auf den Fall der geographischen Redundanz. Dies bedeutet, er verweist MGC 1-1 an MGC4-1, der nun das Gateway GW 4-1 bedient. So wird der Ruf schließlich noch erfolgreich durchgeschaltet. IRS lernt die neue Zuordnung. Er schließt für den Fall der kompletten 1:1 Redundanz, dass nun alle Teilnehmer und Leitungen an MGC 4-x über das interne Vermittlungssystem MGC 4-1 erreichbar sind.

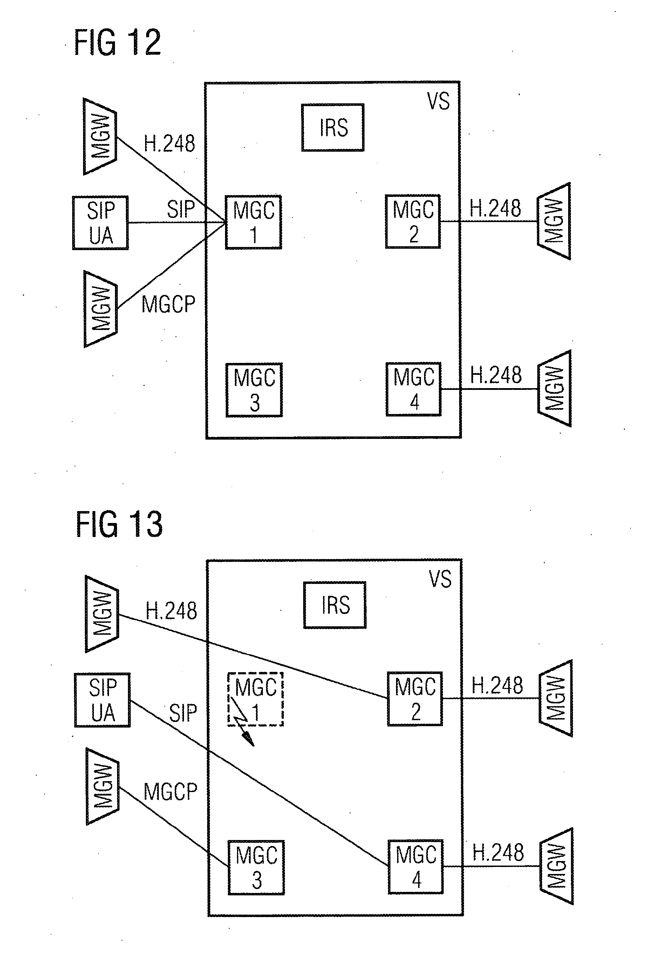

Die Figuren 12 und 13 zeigen den Fall einer flexiblen Zuordnung, bei der die am MGC 1 angeschlossene Peripherie sich im Ersatzschaltefalle auf die verbleibenden internen Vermittlungssysteme verteilen. Das H.248 gesteuerte Media Gateway wird bei Ausfall von MGC 1 durch MGC 2 bedient, der SIP User Agent durch MGC 4 und das MGCP gesteuerte Media Gateway durch MGC 3. Der IRS kennt die zugehörigen Topologie Informationen dieses geographischen Redundanzschemas. Insbesondere weiß er, dass das H.248 MGW an MGC1 auch durch MGC2 gesteuert sein kann, dass der SIP UA durch MGC1 oder MGC4 bedient werden kann und dass das MGCP MGW durch MGC1 oder MGC3 gesteuert werden kann. Auf dieser Grundlage kann der IRS den jeweiligen Verschaltungszustand mitlaufende erlernen. In gleicher Weise werden die Peripherien von MGC 2, MGC3 und MGC4 auf die jeweils verbleibenden MGCs verteilt.

Die Funktion des IRS ist bei geographischer Redundanz selbst redundant auszulegen. Dies kann im einfachsten Falle durch das bloße Vorhandensein eines redundanten Systems erfolgen, das von den internen Vermittlungsstellen angesprochen wird. Fällt im einfachsten Falle der primäre IRS aus, so kann der redundante Partner innerhalb kurzer Zeit auf der Basis des Selbstlernens der Verschaltung die Aufgabe des primären übernehmen. Hierzu müssen die internen Vermittlungsstellen MGC nur wissen, dass es einen redundanten IRS gibt. Alternativ können auch gegenseitige Aktualisierungen der transienten Zustände zwischen den redundanten IRS ausgeführt werden. Ebenso kann auch Loadsharing Betreibsweise der beiden IRS realisiert werden.

## Patentansprüche

1. Verfahren zum Selbstkonfigurieren eines virtuellen Vermittlungssystems (VS), das aus einer Mehrzahl von Vermittlungssystemen (MGCxy) und wenigstens einer zentralen Instanz (IRS) ausgebildet ist,
**dadurch gekennzeichnet,**
**dass** bei einem eintreffenden Call in einem diesem zugeordneten Vermittlungssystem (MGC1-2) eine Ziffernbewertung bzw. eine Zieladressbewertung erfolgt und von dem zugeordneten Vermittlungssystem (MGC1-2) eine Routing Entscheidung zu einem gewünschten Ziel getroffen wird,
**dass**, falls das gewünschte Ziel dem zugeordneten Vermittlungssystem (MGC1-2) nicht bekannt ist, die wenigstens eine zentrale Instanz (IRS) über ein vermutlich zuständiges Vermittlungssystem befragt wird, woraufhin diese nach Maßgabe von Topologiekriterien eine Information über das vermutlich zuständige Vermittlungssystem zurückgibt und der Call zu letzterem aufgebaut und bearbeitet wird,
**dass** im Misserfolgsfall erneut die wenigstens eine zentrale Instanz (IRS) befragt wird und diese anhand von im Call mitgeführten Informationen die selbst verursachte Falschzuordnung des vermutlich zuständigen Vermittlungssystems erkennt und erneut nach Maßgabe der Topologiekriterien die selbst verursachte Falschzuordnung des vermutlich zuständigen Vermittlungssystems korrigiert und einen Wiederholungsversuch solange über die verbleibenden Vermittlungssysteme durchführt, bis ein zuständiges Vermittlungssystem gefunden ist, wobei die Topologiekriterien Topologieinformation des virtuellen Vermittlungssystems (VS) beinhalten über die Art einer geographischen Redundanz.

2. Verfahren nach Anspruch 1,
**dadurch gekennzeichnet,**
**dass** das gewünschte Ziel ein gerufener Teilnehmer des virtuellen Vermittlungssystems (VS) oder eine Verbindungsleitung zu einem weiteren Vermittlungssystem außerhalb des virtuellen Vermittlungssystems (VS) ist.

3. Verfahren nach Anspruch 1, 2,
**dadurch gekennzeichnet,**
**dass** die Topologiekriterien die gesamte Topologieinformation des virtuellen Vermittlungssystems (VS) beinhalten und insbesondere vorgesehene Zuordnungen eines Teilnehmers oder einer Verbindungsleitung zu den internen Vermittlungsknoten einschließlich aller Alternativen umfassen.

4. Verfahren nach Anspruch 1 bis 3,
**dadurch gekennzeichnet,**
**dass** eine der im Call mitgeführten Informationen als eine im Vermittlungssystem (VS) eindeutige Call Identifikationsnummer ,Call-ID, ausgebildet ist.

5. Vorrichtung zum Selbstkonfigurieren eines virtuellen Vermittlungssystems (VS), das aus einer Mehrzahl von Vermittlungssystemen (MGCxy) und wenigstens einer zentralen Instanz (IRS) ausgebildet ist,
**dadurch gekennzeichnet,**
**dass** die Vorrichtung derart eingerichtet ist,
- **dass** eines der Vermittlungssysteme (MGC1-2) beim Eintreffen eines Calls eine Ziffernbewertung bzw. eine Zieladressbewertung vornimmt und eine Routing Entscheidung zu einem gewünschten Ziel trifft,
- **dass** dieses Vermittlungssystem (MGC1-2), falls ihm das gewünschte Ziel nicht bekannt ist, die wenigstens eine zentrale Instanz (IRS) über ein vermutlich zuständiges Vermittlungssystem befragt, woraufhin diese nach Maßgabe von Topologiekriterien eine Information über das vermutlich zuständige Vermittlungssystem zurückgibt und dieses Vermittlungssystem (MGC1-2) den Call zu letzterem aufbaut, wo er bearbeitet wird,
- **dass** im Misserfolgsfall dieses Vermittlungssystem (MGC1-2) erneut die wenigstens eine zentrale Instanz (IRS) befragt, woraufhin diese anhand von im Call mitgeführten Informationen die selbst verursachte Falschzuordnung des vermutlich zuständigen Vermittlungssystems erkennt und erneut nach Maßgabe der Topologiekriterien die selbst verursachte Falschzuordnung des vermutlich zuständigen Vermittlungssystems korrigiert und einen Wiederholungsversuch solange über die verbleibenden Vermittlungssysteme durchführt, bis ein zuständiges Vermittlungssystem gefunden ist,
- wobei die Topologiekriterien Topologieinformation des virtuellen Vermittlungssystems (VS) beinhalten über die Art einer geographischen Redundanz.

6. Vorrichtung nach Anspruch 5,
**dadurch gekennzeichnet,**
**dass** die wenigstens eine zentrale Instanz (IRS) als Teilfunktion eines STP Servers oder als eigenständiger SIP Redirect Server ausgebildet ist und Teil des virtuellen Vermittlungssystems (VS) ist.

7. Vorrichtung nach Anspruch 5, 6,
**dadurch gekennzeichnet,**
**dass** in die Nummerierung eines Ports des virtuellen Vermittlungssystems (VS) eine Nummer eines internen Vermittlungssystems mit eingeht.

8. Vorrichtung nach einem der vorstehenden Ansprüche 5 bis 7,
**dadurch gekennzeichnet,**
**dass** die zentrale Instanz (IRS) anhand einer Call-ID erkennt, ob sie bereits schon einmal eine Zuordnung eines B-seitig zu belegenden internen Vermittlungssystems für einen bestimmten eintreffenden Call vorgenommen hat und daraufhin die getätigte Zuordnung als unzutreffend kennzeichnet und eine alternative Zuordnung auf der Basis der Topologiekriterien ausgibt.

9. Vorrichtung nach einem der vorstehenden Ansprüche 5 bis 7,
**dadurch gekennzeichnet,**
**dass**, falls die zentrale Instanz (IRS) nach einer korrigierten Falschzuordnung keinerlei Rückmeldung über einen Misserfolgsfall erhält, sie Zuordnungstabellen auf der Basis der Korrektur für neuerliche Zuordnungen aktualisiert.

10. Vorrichtung nach einem der vorstehenden Ansprüche 5 bis 7,
**dadurch gekennzeichnet,**
**dass** das virtuelle Vermittlungssystem (VS) eine geographische Redundanz aufweist.

11. Vorrichtung nach Anspruch 10,
**dadurch gekennzeichnet,**
**dass** vermittlungstechnische Daten jedes Teilnehmers und jeder verbindungsleitung in mindestens 2 geographisch an verschiedenen Orten befindlichen internen Vermittlungsstellen des virtuellen Vermittlungssystems (VS) vorhanden sind und die zugehörigen Topologieinformationen der zentralen Instanz (IRS) als Kriterium zur Verfügung stehen.

12. Vorrichtung nach Anspruch 10, 11,
**dadurch gekennzeichnet,**
**dass** die zentrale Instanz (IRS) selbst redundant ausgebildet ist und von allen internen Vermittlungssystemen des virtuellen Vermittlungssystems (VS) zur Entscheidung eines internen Routings herangezogen werden kann.

13. Vorrichtung nach einem der vorstehenden Ansprüche 5 bis 12,
**dadurch gekennzeichnet,**
**dass** die zentrale Instanz (IRS) über ein vermittlungstechnisches Signalisierungsprotokoll mit jedem Vermittlungssystem aus der Mehrzahl der internen Vermittlungssysteme kommuniziert.

14. Vorrichtung nach Anspruch 13,
**dadurch gekennzeichnet,**
**dass** das vermittlungstechnische Protokoll des IRS eines der standardisierten Protokolle SIP, BICC oder #7 ist.

15. Vorrichtung nach einem der vorstehenden Ansprüche 5 bis 12,
**dadurch gekennzeichnet,**
**dass** im Falle externer #7 Signalisierung das virtuelle Vermittlungssystem (VS) einen einheitlichen externen Signalling Point Code aufweist und einen internen Signalling Transfer Point (STP) umfasst, über welchen die gesamte externe #7 Signalisierung geführt wird.

16. Vorrichtung nach Anspruch 15,
**dadurch gekennzeichnet,**
**dass** die zentrale Instanz (IRS) in einer eigenen Einrichtung des virtuellen Vermittlungesystems (VS) ausgebildet ist oder Teil des internen Signalling Transfer Point (STP) ist.

## Claims

1. Method for the self-configuration of a virtual switching system (VS) which is formed from a plurality of switching systems (MGCxy) and at least one central entity (IRS), **characterized**
**in that** an incoming call prompts a switching system (MGC1-2) allocated thereto to make a digit assessment or a destination address assessment and prompts the allocated switching system (MGC1-2) to make a routing decision for a desired destination, in that if the desired destination is not known to the allocated switching system (MGC1-2) then the at least one central entity (IRS) is interrogated about a presumedly competent switching system, and said central entity then returns a piece of information about the presumedly competent switching system on the basis of topology criteria and the call to said presumably competent switching system is set up and handled,
**in that** in the instance of failure the at least one central entity (IRS) is interrogated again and said central entity uses information carried in the call to identify the self-induced misallocation of the presumedly competent switching system and corrects the self-induced misallocation of the presumedly competent switching system again on the basis of topology criteria and makes a repeat attempt via the remaining switching systems until a competent switching system is found, the topology criteria including topology information of the virtual switching system (VS) about the type of a geographical redundancy.

2. Method according to Claim 1,
**characterized**
**in that** the desired destination is the called subscriber in the virtual switching system (VS) or a connecting line to a further switching system outside of the virtual switching system (VS).

3. Method according to Claims 1 and 2,
**characterized**
**in that** the topology criteria include all of the topology information from the virtual switching system (VS), and particularly comprise the envisaged allocations of a subscriber or a connecting line to the internal switching nodes, including all alternatives.

4. Method according to Claims 1 to 3,
**characterized**
**in that** one of the pieces of information carried in the call is in the form of a call identification number, Call-ID, which is unique in the switching system (VS).

5. Apparatus for the self-configuration of a virtual switching system (VS) which is formed from a plurality of switching systems (MGCxy) and at least one central entity (IRS),
**characterized**
**in that** the apparatus is set up such
- that one of the switching systems (MGC1-2) makes a digit assessment or a destination address assessment and makes a routing decision for a desired destination when a call is incoming,
- that this switching system (MGC1-2), if the desired destination is not known to it, interrogates the at least one central entity (IRS) about a presumedly competent switching system, and said central entity then returns a piece of information about the presumedly competent switching system on the basis of topology criteria and this switching system (MGC1-2) sets up the call to said presumably competent switching system, where it is handled,
- that in the instance of failure this switching system (MGC1-2) interrogates the at least one central entity (IRS) again, and said central entity then uses information carried in the call to identify the self-induced misallocation of the presumedly competent switching system and corrects the self-induced misallocation of the presumedly competent switching system again on the basis of the topology criteria and makes a repeat attempt via the remaining switching systems until a competent switching system is found,
- the topology criteria including topology information of the virtual switching system (VS) about the type of a geographical redundancy.

6. Apparatus according to Claim 5,
**characterized**
**in that** the at least one central entity (IRS) is in the form of a subfunction of an STP server or in the form of a standalone SIP redirect server and is part of the virtual switching system (VS) .

7. Apparatus according to Claims 5 and 6,
**characterized**
**in that** the numbering of a port in the virtual switching system (VS) incorporates a number of an internal switching system.

8. Apparatus according to one of the preceding Claims 5 to 7,
**characterized**
**in that** the central entity (IRS) uses a call ID to identify whether it has allocated an internal switching system which is to be engaged at the B end for a particular incoming call once already and then flags the allocation made as incorrect and outputs an alternative allocation on the basis of the topology criteria.

9. Apparatus according to one of the preceding Claims 5 to 7,
**characterized**
**in that** if the central entity (IRS) does not receive a report about an instance of failure after a corrected misallocation then it updates allocation tables on the basis of the correction for new allocations.

10. Apparatus according to one of the preceding Claims 5 to 7,
**Characterized**
**in that** the virtual switching system (VS) has geographical redundancy.

11. Apparatus according to Claim 10,
**characterized**
**in that** call-processing data of each subscriber and of each connecting line are present in at least two internal switching centers in the virtual switching system (VS) which are at geographically different locations, and the associated topology information from the central entity (IRS) is available as a criterion.

12. Apparatus according to Claims 10 and 11,
**characterized**
**in that** the central entity (IRS) is itself in redundant form and can be used by all internal switching systems in the virtual switching system (VS) to decide an internal routing.

13. Apparatus according to one of the preceding Claims 5 to 12,
**characterized**
**in that** the central entity (IRS) uses a call-processing signaling protocol to communicate with every switching system from the plurality of the internal switching systems.

14. Apparatus according to Claim 13,
**characterized**
**in that** the call-processing protocol of the IRS is one of the standardized protocols SIP, BICC or #7.

15. Apparatus according to one of the preceding Claims 5 to 12,
**characterized**
**in that** in the instance of external #7 signaling the virtual switching system (VS) has a standard external signaling point code and comprises an internal signaling transfer point (STP) via which all of the external #7 signaling is routed.

16. Apparatus according to Claim 15,
**characterized**
**in that** the central entity (IRS) is formed in a dedicated device in the virtual switching system (VS) or is part of the internal signaling transfer point (STP).

## Revendications

1. Procédé d'autoconfiguration d'un système de commutation virtuel (VS) qui est constitué d'une pluralité de systèmes de commutation (MGCxy) et d'au moins une instance centrale (IRS), **caractérisé en ce que**
- étant donné un appel entrant, une évaluation des chiffres resp. une évaluation de l'adresse cible est effectuée dans un système de commutation y affecté (MGC1-2) et une décision de routage vers une destination souhaitée est prise par le système de commutation affecté (MGC1-2),
- si la destination souhaitée n'est pas connue du système de commutation affecté (MGC1-2), l'au moins une instance centrale (IRS) est interrogée sur un système de commutation présumé compétent, suite à quoi ladite instance, conformément à des critères topologiques, remet une information sur le système de commutation présumé compétent et l'appel est établi vers ce dernier et est traité,
- en cas d'échec, l'au moins une instance centrale (IRS) est de nouveau interrogée et celle-ci, à l'aide d'informations contenues dans l'appel, reconnaît l'affectation incorrecte du système de commutation présumé compétent causée par elle-même et corrige, de nouveau conformément aux critères topologiques, l'affectation incorrecte du système de commutation présumé compétent causée par elle-même et effectue une tentative de répétition portant sur les systèmes de commutation restants jusqu'à ce qu'un système de commutation compétent soit trouvé,
les critères topologiques contenant une information topologique du système de commutation virtuel (VS) concernant le type d'une redondance géographique.

2. Procédé selon la revendication 1, **caractérisé en ce que** la destination souhaitée est un usager appelé du système de commutation virtuel (VS) ou une ligne de liaison vers un autre système de commutation en dehors du système de commutation virtuel (VS).

3. Procédé selon la revendication 1, 2, **caractérisé en ce que** les critères topologiques contiennent l'ensemble de l'information topologique du système de commutation virtuel (VS) et, plus particulièrement, des affectations prévues d'un usager ou d'une ligne de liaison aux noeuds de commutation internes, y compris toutes les alternatives.

4. Procédé selon la revendication 1 à 3, **caractérisé en ce que** l'une des informations contenues dans l'appel se présente sous la forme d'un numéro d'identification d'appel Call-ID univoque dans le système de commutation (VS) .

5. Dispositif d'autoconfiguration d'un système de commutation virtuel (VS) constitué d'une pluralité de systèmes de commutation (MGCxy) et d'au moins une instance centrale (IRS), **caractérisé en ce que** le dispositif est aménagé de manière telle que
- l'un des systèmes de commutation (MGC1-2), à l'entrée d'un appel, effectue une évaluation des chiffres resp. une évaluation de l'adresse cible et prend une décision de routage vers une destination souhaitée,
- ce système de commutation (MGC1-2), s'il ne connaît pas la destination souhaitée, interroge l'au moins une instance centrale (IRS) sur un système de commutation présumé compétent, suite à quoi ladite instance, conformément à des critères topologiques, remet une information sur le système de commutation présumé compétent et ce système de commutation (MGC1-2) établit l'appel vers ce dernier où ledit appel est traité,
- en cas d'échec, ce système de commutation (MGV1-2) interroge de nouveau l'au moins une instance centrale (IRS), suite à quoi celle-ci, à l'aide d'informations contenues dans l'appel, reconnaît l'affectation incorrecte du système de commutation présumé compétent causée par elle-même et corrige, de nouveau conformément aux critères topologiques, l'affectation incorrecte du système de commutation présumé compétent causée par elle-même et effectue une tentative de répétition portant sur les systèmes de commutation restants jusqu'à ce qu'un système de commutation compétent soit trouvé,
les critères topologiques contenant une information topologique du système de commutation virtuel (VS) concernant le type d'une redondance géographique.

6. Dispositif selon la revendication 5, **caractérisé en ce que** l'au moins une instance centrale (IRS) se présente sous la forme d'une fonction partielle d'un serveur STP ou d'un serveur de redirection SIP autonome et fait partie du système de commutation virtuel (VS).

7. Dispositif selon la revendication 5, 6, **caractérisé en ce qu'**un numéro d'un système de commutation interne entre également dans la numérotation d'un port du système de commutation virtuel (VS).

8. Dispositif selon l'une des revendications précédentes 5 à 7, **caractérisé en ce que** l'instance centrale (IRS) reconnaît, à l'aide d'un ID d'appel, si, pour un appel entrant déterminé, elle a déjà effectué une affectation d'un système de commutation interne à occuper sur le côté B, et marque ensuite comme incorrecte l'affectation effectuée et produit en sortie une affectation alternative sur la base des critères topologiques.

9. Dispositif selon l'une des revendications précédentes 5 à 7, **caractérisé en ce que** l'instance centrale (IRS), si elle ne reçoit aucune réponse relative à un cas d'échec à la suite d'une affectation incorrecte corrigée, actualise des tables de correspondance sur la base de la correction pour de nouvelles affectations.

10. Dispositif selon l'une des revendications précédentes 5 à 7, **caractérisé en ce que** le système de commutation virtuel (VS) comporte une redondance géographique.

11. Dispositif selon la revendication 10, **caractérisé en ce que** des données de commutation de chaque usager et de chaque ligne de liaison sont présentes à au moins deux centres de commutation internes du système de commutation virtuel (VS) qui se trouvent géographiquement à des endroits différents et les informations topologiques associées de l'instance centrale (IRS) sont disponibles en tant que critère.

12. Dispositif selon la revendication 10, 11, **caractérisé en ce que** l'instance centrale (IRS) est elle-même réalisée de manière redondante et tous les systèmes de commutation internes du système de commutation virtuel (VS) peuvent y faire appel pour prendre une décision de routage interne.

13. Dispositif selon l'une des revendications précédentes 5 à 12, **caractérisé en ce que** l'instance centrale (IRS) communique avec chaque système de commutation de la pluralité des systèmes de commutation internes via un protocole de signalisation de la technique de commutation.

14. Dispositif selon la revendication 13, **caractérisé en ce que** le protocole de la technique de commutation de l'IRS est l'un des protocoles standardisés SIP, BICC ou #7.

15. Dispositif selon l'une des revendications précédentes 5 à 12, **caractérisé en ce que**, en cas de signalisation numéro 7 externe, le système de commutation virtuel (VS) comporte un code de point de signalisation externe uniforme et un point de transfert de signalisation (STP) interne par lequel passe l'ensemble de la signalisation numéro 7 externe.

16. Dispositif selon la revendication 15, **caractérisé en ce que** l'instance centrale (IRS) est réalisée dans un dispositif propre du système de commutation virtuel (VS) ou fait partie du point de transfert de signalisation (STP) interne.
